Europäisches Patentamt

European Patent Office

Office européen des brevets

(11) Veröffentlichungsnummer : **0 079 084**
**B1**

(12) **EUROPÄISCHE PATENTSCHRIFT**

(45) Veröffentlichungstag der Patentschrift :
24.04.85

(21) Anmeldenummer : 82110338.9

(22) Anmeldetag : 10.11.82

(51) Int. Cl.⁴ : **F 16 C 32/06**

(54) Drossel für Gaslager.

(30) Priorität : 11.11.81 DE 3144788

(43) Veröffentlichungstag der Anmeldung :
18.05.83 Patentblatt 83/20

(45) Bekanntmachung des Hinweises auf die Patenterteilung : 24.04.85 Patentblatt 85/17

(84) Benannte Vertragsstaaten :
CH DE FR GB IT LI SE

(56) Entgegenhaltungen :
DE-A- 548 385
DE-A- 1 425 077
DE-A- 1 937 401
DE-A- 1 943 833
DE-A- 2 208 523
DE-A- 2 514 370
DE-A- 2 538 226
FR-A- 2 005 502
FR-A- 2 252 774
FR-A- 2 414 142
GB-A- 972 771
GB-A- 1 059 036
US-A- 3 110 527
US-A- 3 450 156
US-A- 3 758 175
US-A- 3 785 707

(73) Patentinhaber : Firma Carl Zeiss
D-7920 Heidenheim (Brenz) (DE)

(72) Erfinder : Enderle, Eckhard, Dipl.-Ing.
Hüttingerstrasse 33
D-7080 Aalen-Wasseralfingen (DE)

Jouve, 18, rue St-Denis, 75001 Paris, France

## Beschreibung

Die Erfindung betrifft eine Drossel zur Konstanthaltung des Lagerspaltes bei Gaslagern durch druckabhängige Regelung des Drosselquerschnitts.

Gaslager besitzen in der Regel einen Drosseleinsatz mit festem, einstellbaren Querschnitt, mit dem der Gasdurchsatz und damit der Lagerdruck, der die Höhe des Lagerspaltes bestimmt, eingestellt werden kann. Nun hängt die Höhe des Lagerspaltes außerdem von der auf das Lager einwirkenden Last ab. Bei wechselnden Lastverhältnissen ändert sich daher laufend die Höhe des Lagerspaltes, was bei bestimmten Anwendungsfällen, beispielsweise wenn die Lager zur Führung beweglicher Teile in Präzisionsmeß- oder Bearbeitungsmaschinen eingesetzt sind, unerwünscht ist.

Es sind bereits Gleitlager bekannt, die Drosseleinsätze mit regelbarem Querschnitt besitzen, wobei der lastabhängige Lagerdruck eine Änderung des Drosselquerschnitts bewirkt. Beispielsweise sind in den DE-A 25 38 226 und DE-A 25 48 385 Drosseleinsätze aus gummielastischem Material bekannt, das Kapillarbohrungen für die Schmiermittelzufuhr, im vorliegenden Falle Öl für ein Radiallager, enthält. Diese Bohrungen erweitern sich mit zunehmendem Lagerdruck, der sich bei stärkerer Belastung einstellt.

In der DE-A 19 43 833 ist ein Axialgleitlager beschrieben, das einen vom Lagerdruck gegen Federkraft bewegbaren Ring besitzt, der den Querschnitt mehrerer Zuführungsbohrungen für das benötigte Schmiermittel steuert.

Diese bekannten Drosseleinsätze sind Bestandteile des jeweiligen Lagers, in dem sie verwendet sind, und in Form und Aufbau auf dieses abgestimmt und optimiert.

Aus der DE-A 25 14 370 ist eine Vorrichtung zur Regelung des Lagerspaltes von Gaslagern bekannt, in der durch den Lagerdruck gesteuert die Temperatur des Arbeitsgases verändert und damit ein Erweitern bzw. Schrumpfen der Lagerdüsen bewirkt wird. Eine derartige Regelung ist relativ aufwendig und erfordert den Einsatz spezieller, hinsichtlich ihres thermischen Ausdehnungskoeffizienten ausgesuchter Materialien für das Lager.

In der US-PS 37 58 175 ist eine Drossel für ein Öldrucklager offenbart, die den Schmiermitteldurchsatz abhängig von der Lagerlast regelt und als separate Vorschalteinheit ausgebildet ist. Diese Drossel enthält eine von der Differenz zwischen dem eingangsseitigen und dem lagerseitigen Druck gesteuerte Membran, über die der Durchflußquerschnitt eingestellt wird. Die bekannte Drossel ist jedoch auf die bei Fluidlagern auftretenden, sehr viel höheren Arbeitsdrücke ausgelegt und besitzt dementsprechend einen Aufbau, der sich nicht ohne weiteres auf die bei Gaslagern geltenden Verhältnisse übertragen läßt. So ist die Membran selbst federnd ausgebildet und als Drosselstelle wirkt der scheibenförmige Spalt zwischen der Membran und dem gegenüberliegenden Gehäuseteil.

Bei dieser Bauweise können Vibrationen der Membran beim Regelvorgang auftreten, denen durch besondere Maßnahmen begegnet werden muß. Außerdem läßt sich die bekannte Drossel nicht ohne weiteres bezüglich ihrer Regelcharakteristik an unterschiedlich dimensionierte Lager oder Lagergruppen anpassen.

Es ist die Aufgabe der vorliegenden Erfindung ein Drosselelement der eingangs genannten Art zu schaffen, das auf die bei Gaslagern herrschenden Druckverhältnisse abgestimmt ist und bei möglichst einfachem Aufbau hinsichtlich seiner Regelcharakteristik leicht an die zu stabilisierenden Lager bzw. Lagergruppen anpassen läßt.

Diese Aufgabe wird durch die im Kennzeichen des Hauptanspruches genannten Maßnahmen gelöst.

Die erfindungsgemäße Drossel kann direkt in die Versorgungsleitung eines Gaslagers beliebiger Bauform eingebaut werden und erhöht dann dessen Steifigkeit ganz erheblich. Voraussetzung ist lediglich, daß das Gaslager keine weiteren Drosselstellen enthält, deren Querschnitt mit dem der Vorschaltdrossel vergleichbar bzw. kleiner sind. Diese Voraussetzung ist jedoch fast immer zu erfüllen, u. a. indem man bei Gaslagern mit eingebauten Drosseln diese entfernt.

Ein weiterer Vorteil der Erfindung besteht darin, daß mehrere Gaslager gruppenweise zusammengefaßt mit nur einer Vorschaltdrossel hinsichtlich ihres Lagerspaltes stabilisiert werden können.

Insbesondere bei Mehrkoordinatenmeßmaschinen, deren längs der Meßachsen verschiebliche Schlitten auf Gaslagern gleiten, ist eine Stabilisierung des Lagerspalts emminent wichtig. Wenn z. B. der auf dem Querträger einer Portalmeßmaschine verschiebliche Schlitten sich längs des Querträgers bewegt, ändert sich die Belastung der in die Portalfüße eingebauten Lager erheblich, was bei ungeregelten Lagern zu einer Kippung des Portals um seine Verschiebeachse führt. Diese Verkippung führt zu einem Meßfehler, da die Position des Portals direkt in die Meßgenauigkeit der Maschine eingeht.

Mit je einer erfindungsgemäßen Drossel pro Portalfuß lassen sich die dort eingebauten Lagergruppen so stabilisieren, daß der genannte Meßfehler keine Rolle mehr spielt.

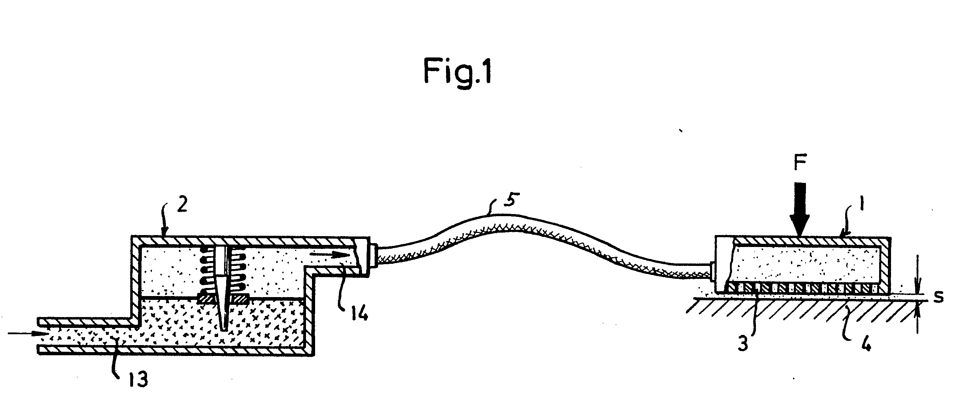

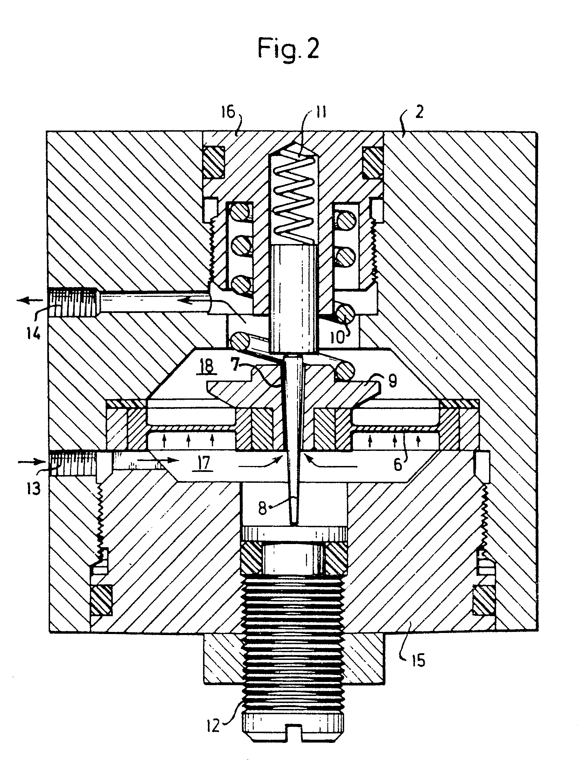

Nachstehend ist ein Ausführungsbeispiel der Erfindung anhand der Figuren 1 und 2 beigefügten Zeichnungen näher erläutert. Dabei zeigen

Figur 1 eine Prinzipskizze eines Luftlagers mit vorgeschalteter Drossel ;

Figur 2 eine Detailzeichnung der Drossel 2 aus Fig. 1.

In Fig. 1 ist mit 1 ein Gaslager (Achsialgleitlager) bezeichnet, das vermittels der aus den Bohrungen 3 strömenden Luft auf der Unterlage 4 gleitet. Der Abstand zwischen der Unterlage 4 und dem Lager 1 ist der sich aus Luftdurchsatz und Belastung F ergebende Lagerspalt S.

In die Zuleitung 5 des Gaslagers 1 ist die Drossel 2 geschaltet, die aus einem eigenen, geschlossenen Gehäuse besteht, das zwei Anschlüsse 13 und 14 für die Zufuhr bzw. den Ausgang des Arbeitsgases besitzt.

Wie die Detailzeichnung (Fig. 2) zeigt, enthält die Drossel 2 zwei Kammern 17 und 18, die von einer Membran 6 getrennt sind, welche von einem luftdichten Einsatz 15 gehalten ist. Die Membran trägt ein Einsatzstück 9 mit konischer Bohrung, der von der Druckdifferenz zwischen den Kammern 17 und 18 gegen die Kraft der Feder 10 beweglich ist und zusammen mit dem durch die Bohrung gesteckten, ebenfalls konischen Stift 8 eine Drosselstrecke mit variablem Querschnitt bildet.

Der konische Stift 8 ist über eine Einstellschraube 12 gegen die Kraft einer zweiten Feder 11 axial verschiebbar, die sich ebenso wie die Feder 10 an einem zweiten luftdichten Einsatz 16 abstützt. Der Drosselquerschnitt läßt sich somit an die Erfordernisse des Lagers 1 anpassen, ohne daß die Regeleigenschaften der Drossel 2 davon beeinflußt werden.

Radial ist der Stift 8 nicht fixiert, so daß er sich innerhalb der Bohrung im Einsatz 9 selbst zentrieren kann, wodurch ein « Kleben » zwischen Einsatz 9 und Stift 8, das die Funktion der Drossel beeinträchtigen würde, vermieden wird.

Steigt nun der Druck in der Kammer 18 aufgrund einer höheren Belastung des Lagers 1 an, so vergrößert sich der Querschnitt der Drosselstelle 7, und der Gasdurchsatz durch das System Drossel 2/Lager 1 steigt an, was der Verringerung des Lagerspalts S aufgrund der Belastung entgegenwirkt.

Durch Vorschalten der beschriebenen Drossel kommt man der theoretisch errechneten Kennlinie für ein stabilisiertes Lager sehr nahe. Eine weitere Annäherung an den Idealfall läßt sich im Bereich extrem großer Lagerbelastung dann erreichen, wenn die Querschnittsänderung der Drosselstrecke sich nicht linear mit der Druckdifferenz zwischen den Kammern 17 und 18 ändert. Das läßt sich beispielsweise durch eine entsprechende Formgebung des Stifts 8 erzielen, dessen Konuswinkel dann über die Länge des Stifts gesehen gemäß einer zu berechnenden Funktion variiert.

## Patentansprüche

1. Drossel zur Konstanthaltung des Lagerspaltes bei Gaslagern durch druckabhängige Regelung des Drosselquerschnitts, wobei das Drosselelement (2) als separate Vorschalteinheit ausgebildet ist, die die Differenz zwischen dem eingangsseitigen und dem ausgangsseitigen Gasdruck der Vorschalteinheit zur Querschnittsregelung der Drosselstrecke verwendet derart, daß sich der Querschnitt bei abnehmender Druckdifferenz vergrößert, wobei die Drossel zwei durch eine bewegbare Membran (6) getrennte Kammern (17, 18) enthält, die mit dem Eingang (13) bzw. Ausgang (14) des Drosselelements (2) verbunden sind, dadurch gekennzeichnet, daß die Membran gegen Federkraft bewegbar ist und die Kammern (17, 18) über eine Bohrung in einem Einsatzstück (9), durch die ein Stift (8) gesteckt ist, verbunden sind, wobei Bohrung bzw. Stift (18) einen veränderlichen Querschnitt besitzen und Einsatzstück (9) oder Stift (18) mit der Membran (6) gekoppelt sind.

2. Drossel nach Anspruch 1, dadurch gekennzeichnet, daß das Einsatzstück (9) mit der Membran (6) verbunden ist und die Bohrung sich ausgangsseitig konisch erweitert, und den ebenfalls konisch geformten Stift (8) umgibt.

3. Drossel nach Anspruch 2, dadurch gekennzeichnet, daß der konische Stift (8) axial justierbar befestigt ist.

4. Drossel nach Anspruch 3, dadurch gekennzeichnet, daß der Stift (8) so gelagert ist, daß er zum Zwecke der Selbstzentrierung radial verschieblich ist.

5. Drossel nach Anspruch 4, dadurch gekennzeichnet, daß der Konuswinkel des Stifts (8) über dessen Länge nicht konstant ist.

6. Drossel nach Anspruch 1-5, dadurch gekennzeichnet, daß an eine Drossel ausgangsseitig mehrere Gaslager angeschlossen sind.

7. Drossel nach Anspruch 1-6, gekennzeichnet durch ihre Verwendung zur Verbesserung der Steifigkeit von Gaslagern in Mehrkoordinatenmeßmaschinen.

## Claims

1. Throttle for maintaining a constant bearing gap in gas bearings by pressure-dependent control of throttle cross section, the throttle element (2) being developed as a separate ancillary unit which employs the difference between the inlet side an outlet side gas pressures of the ancillary unit to regulate the cross section of the throttle path in such manner that the cross section increases when the pressure difference decreases, the throttle containing two chambers (17, 18) separated by a membrane (6) and connected to the inlet (13) and outlet (14) of the throttle element (22), characterized by the fact the membrane is displaceable against spring pressure (10), the chambers (17, 18) are connected with each other by a hole in an insert (9) through which hole a pin (8) is inserted, the hole or the pin (8) having a variable cross section and the insert (9) or the pin (10) being connected to the membrane (6).

2. Throttle according to claim 1, characterized by the fact that the insert (9) is coupled to the membrane (6) and the hole widens conically towards the outlet side and surrounds the pin (8), which is also of conical development.

3. Throttle according to claim 2, characterized by the fact that the conical pin (8) is fastened in such a manner that it can be axially adjusted.

4. Throttle according to claim 3, characterized by the fact that the pin (8) is so mounted that it is radially displaceable for purposes of self-centering.

5. Throttle according to claim 4, characterized by the fact that the cone angle of the pin (8) is not constant over the entire length of the pin.

6. Throttle according to claims 1-5, characterized by the fact that a plurality of gas bearings are connected to the outlet side of one throttle.

7. Throttle according to claims 1-6, characterized by its use in order to improve the stiffness of gas bearings in multiple-coordinate measurement machines.

**Revendications**

1. Palier pour maintenir constant le jeu de palier dans les coussinets à gaz, grâce à une régulation de la section d'étranglement, indépendante de la pression, l'élément d'étranglement (2) étant conçu comme une unité distincte installée en amont, qui utilise la différence entre la pression du gaz côté entrée et la pression du gaz côté sortie de l'unité amont, pour la régulation de la section transversale du trajet d'étranglement, de telle sorte que cette section augmente quand la différence de pression diminue, l'étrangleur comportant deux chambres (17, 18) séparées par une membrane (6), chambres qui sont reliées respectivement à l'entrée (13) et à la sortie (14) de l'élément d'étranglement (2), caractérisé en ce que la membrane est mobile contre la force d'un ressort et que les chambres (17, 18) sont reliées par l'intermédiaire d'un alésage aménagé dans une pièce (9), alésage dans lequel est enfichée une broche (8), l'alésage ou la broche (8) ayant une section transversale variable, et la pièce (9) ou la broche (8) étant couplées à la membrane (6).

2. Etrangleur selon la revendication 1, caractérisé en ce que la pièce (9) est reliée à la membrane (6), et que l'alésage s'élargit coniquement vers la sortie, en entourant la broche (8), elle-même de forme conique.

3. Etrangleur selon la revendication 2, caractérisé en ce que la broche conique (8) est fixée de façon à pouvoir être ajustée en position axiale.

4. Etrangleur selon la revendication 3, caractérisé en ce que la broche (8) est logée de façon à pouvoir subir un déplacement radial pour permettre son auto-centrage.

5. Etrangleur selon la revendication 4, caractérisé en ce que la conicité de la tige (8) n'est pas constante sur toute sa longueur.

6. Etrangleur selon l'une quelconque des revendications 1 à 5, caractérisé en ce que plusieurs paliers à gaz sont raccordés à la sortie d'un étrangleur unique.

7. Etrangleur selon l'une quelconque des revendications 1 à 6, caractérisé par son utilisation pour améliorer la rigidité des paliers à gaz dans les machines de mesures à plusieurs coordonnées.

Fig.1

0 079 084

# Fig. 2